# EUROPEAN PATENT APPLICATION

(11) **EP 3 905 669 A1**
(43) Date of publication of application: **03.11.2021**
(21) Application number: 19903954.6
(22) Date of filing: 30.12.2019
(51) Int. Cl.: H04N 7/15

(54) **METHOD FOR REALIZING REMOTE ASSISTANCE AND RELATED DEVICE**

(30) Priority: 29.12.2018 CN 201811653187
(71) Applicant: ZTE Corporation, Shenzhen, Guangdong 518057 (CN)
(72) Inventor: SU, Dafeng, Shenzhen, Guangdong 518057 (CN)
(74) Representative: Deambrogi, Edgardo
(86) International application number: PCT/CN2019/129749
(87) International publication number: WO 2020/135851

(57) **Abstract**

Provided are a method for realizing remote assistance and a related device. The method includes that: an assisting device receives and displays first data, which includes one of the following: an audio stream and a video stream collected by an assistance requesting device; or the audio stream and the video stream collected by the assistance requesting device and first electronic white board data; and the assisting device sends second data.

## Description

### Technical Field

Embodiments of the disclosure relate to, but are not limited to, the technical field of multimedia video conference.

### Background

Remote assistance is mainly implemented by the following schemes in the related art: 1) data in the form of files such as pictures and documents is returned offline, and then assistance is provided by online voice or offline message; 2) a monitoring system is integrated to achieve the one-way transmission of real-time video data used for monitoring, and then assistance is provided in other ways; and 3) other ways such as a remote desktop are used for remote assistance. The main problem of these types of schemes is that the means of assistance are limited and it is impossible to transmit an instruction of an assisting party to the assisted party (an assistance requesting party) accurately and in real time.

### Summary

The embodiments of the disclosure provide a method for realizing remote assistance, which may include the following operations. An assisting device receives and displays first data. The first data includes one of the following: an audio stream and a video stream collected by an assistance requesting device, or the audio stream and the video stream collected by the assistance requesting device and first electronic white board data. The assisting device sends second data. The second data includes one of the following: the video stream in the first data and second electronic white board data; a picture captured from the video stream in the first data and the second electronic white board data; a playback video stream selected from the video stream in the first data and the second electronic white board data; an audio stream collected by the assisting device, the video stream in the first data, and the second electronic white board data; the audio stream collected by the assisting device, the picture captured from the video stream in the first data, and the second electronic white board data; or the audio stream collected by the assisting device, the playback video stream selected from the video stream in the first data, and the second electronic white board data.

The embodiments of the disclosure provide a method for realizing remote assistance, which may include the following operations. An assistance requesting device sends first data. The first data includes one of the following: an audio stream and a video stream collected by the assistance requesting device; or the audio stream and the video stream collected by the assistance requesting device and first electronic white board data. The assistance requesting device receives and displays second data. The second data includes one of the following: the video stream in the first data and second electronic white board data; a picture captured from the video stream in the first data and the second electronic white board data; a playback video stream selected from the video stream in the first data and the second electronic white board data; an audio stream collected by the assisting device, the video stream in the first data, and the second electronic white board data; the audio stream collected by the assisting device, the picture captured from the video stream in the first data, and the second electronic white board data; or the audio stream collected by the assisting device, the playback video stream selected from the video stream in the first data, and the second electronic white board data.

The embodiments of the disclosure provide a method for realizing remote assistance, which may include the following operations. An assisting server receives first data sent by an assistance requesting device and forwards the first data to an assisting device. The first data includes one of the following: an audio stream and a video stream collected by the assistance requesting device; or the audio stream and the video stream collected by the assistance requesting device and first electronic white board data. The assisting server receives second data sent by the assisting device and forwards the second data to the assistance requesting device. The second data includes one of the following: the video stream in the first data and second electronic white board data; a picture captured from the video stream in the first data and the second electronic white board data; a playback video stream selected from the video stream in the first data and the second electronic white board data; an audio stream collected by the assisting device, the video stream in the first data, and the second electronic white board data; the audio stream collected by the assisting device, the picture captured from the video stream in the first data, and the second electronic white board data; or the audio stream collected by the assisting device, the playback video stream selected from the video stream in the first data, and the second electronic white board data.

The embodiments of the disclosure provide a method for realizing remote assistance, which may include the following operations. A third-party assisting device receives a first request sent by an assisting device. The first request is used for requesting a third party to participate in assistance. The third-party assisting device sends a connection establishment request to an assisting server, and receives first data sent by the assisting server. The first data includes one of the following: an audio stream and a video stream collected by an assistance requesting device; or the audio stream and the video stream collected by the assistance requesting device and first electronic white board data. The third-party assisting device sends third data. The third data includes one of the following: the video stream in the first data and third electronic white board data; a picture captured from the video stream in the first data and the third electronic white board data; a playback video stream selected from the video stream in the first data and the third electronic white board data; an audio stream collected by the third-party assisting device, the video stream in the first data, and the third electronic white board data; the audio stream collected by the third-party assisting device, the picture captured from the video stream in the first data, and the third electronic white board data; or the audio stream collected by the third-party assisting device, the playback video stream selected from the video stream in the first data, and the third electronic white board data.

The embodiments of the disclosure provide a method for realizing remote assistance, which may include the following operations. An assisting server receives a connection establishment request sent by at least one third-party assisting device, and sends first data to the at least one third-party assisting device. The assisting server receives second data sent by an assisting device and third data sent by the at least one third-party assisting device. The assisting server sends fourth data obtained by mixing the second data and the third data to an assistance requesting device.

The embodiments of the disclosure provide a method for realizing remote assistance, which may include the following operations. An assistance requesting device receives and displays fourth data. The fourth data includes one of the following: an audio stream obtained by performing audio mixing on an audio stream in second data and an audio stream in third data; fourth electronic white board data obtained by internally superimposing and mixing second electronic white board data and third electronic white board data; or a video stream in first data or a picture captured from the video stream in the first data or a playback video stream selected from the video stream in the first data, which is currently being subjected to electronic white board based marking and/or writing.

The embodiments of the disclosure provide an assisting device, which may include: a receiving and displaying unit and a sending unit. The receiving and displaying unit is configured to receive and display first data. The first data includes one of the following: an audio stream and a video stream collected by an assistance requesting device; or the audio stream and the video stream collected by the assistance requesting device and first electronic white board data. The sending unit is configured to send second data. The second data includes one of the following: the video stream in the first data and second electronic white board data; a picture captured from the video stream in the first data and the second electronic white board data; a playback video stream selected from the video stream in the first data and the second electronic white board data; an audio stream collected by the assisting device, the video stream in the first data, and the second electronic white board data; the audio stream collected by the assisting device, the picture captured from the video stream in the first data, and the second electronic white board data; or the audio stream collected by the assisting device, the playback video stream selected from the video stream in the first data, and the second electronic white board data.

The embodiments of the disclosure provide an assistance requesting device, which may include: a sending unit, and a receiving and displaying unit. The sending unit is configured to send first data. The first data includes one of the following: an audio stream and a video stream collected by an assistance requesting device; or the audio stream and the video stream collected by the assistance requesting device and first electronic white board data. The receiving and displaying unit is configured to receive and display second data. The second data includes one of the following: the video stream in the first data and second electronic white board data; a picture captured from the video stream in the first data and the second electronic white board data; a playback video stream selected from the video stream in the first data and the second electronic white board data; an audio stream collected by the assisting device, the video stream in the first data, and the second electronic white board data; the audio stream collected by the assisting device, the picture captured from the video stream in the first data, and the second electronic white board data; or the audio stream collected by the assisting device, the playback video stream selected from the video stream in the first data, and the second electronic white board data.

The embodiments of the disclosure provide an assisting server, which may include a first receiving and forwarding unit, and a second receiving and forwarding unit. The first receiving and forwarding unit is configured to receive first data sent by an assistance requesting device and forward the first data to an assisting device. The first data includes one of the following: an audio stream and a video stream collected by the assistance requesting device; or the audio stream and the video stream collected by the assistance requesting device and first electronic white board data. The second receiving and forwarding unit is configured to receive second data sent by the assisting device and forward the second data to the assistance requesting device. The second data includes one of the following: the video stream in the first data and second electronic white board data; a picture captured from the video stream in the first data and the second electronic white board data; a playback video stream selected from the video stream in the first data and the second electronic white board data; an audio stream collected by the assisting device, the video stream in the first data, and the second electronic white board data; the audio stream collected by the assisting device, the picture captured from the video stream in the first data, and the second electronic white board data; or the audio stream collected by the assisting device, the playback video stream selected from the video stream in the first data, and the second electronic white board data.

The embodiments of the disclosure provide a third-party assisting device, which may include: a receiving unit, a first sending unit, and a second sending unit. The receiving unit is configured to receive first request sent by an assisting device. The first request is used for requesting a third party to participate in assistance. The first sending unit is configured to send a connection establishment request to an assisting server, and receive first data sent by the assisting server. The first data includes one of the following: an audio stream and a video stream collected by the assistance requesting device; or the audio stream and the video stream collected by the assistance requesting device and first electronic white board data. The second sending unit is configured to send third data. The third data includes one of the following: the video stream in the first data and third electronic white board data; a picture captured from the video stream in the first data and the third electronic white board data; a playback video stream selected from the video stream in the first data and the third electronic white board data; an audio stream collected by the third-party assisting device, the video stream in the first data, and the third electronic white board data; the audio stream collected by the third-party assisting device, the picture captured from the video stream in the first data, and the third electronic white board data; or the audio stream collected by the third-party assisting device, the playback video stream selected from the video stream in the first data, and the third electronic white board data.

The embodiments of the disclosure provide an assisting server, which may include: a first receiving and sending unit, a second receiving unit, and a sending unit. The first receiving and sending unit is configured to receive a connection establishment request sent by at least one third-party assisting device, and send first data to the at least one third-party assisting device. The second receiving unit is configured to receive second data sent by an assisting device and third data sent by the at least one third-party assisting device. The sending unit is configured to send fourth data obtained by mixing the second data and the third data to an assistance requesting device.

The embodiments of the disclosure provide an assistance requesting device, which may include: a receiving and displaying unit, configured to receive and display fourth data. The fourth data includes one of the following: an audio stream obtained by performing audio mixing on an audio stream in second data and an audio stream in third data; fourth electronic white board data obtained by internally superimposing and mixing second electronic white board data and third electronic white board data; or a video stream in first data or a picture captured from the video stream in the first data or a playback video stream selected from the video stream in the first data, which is currently being subjected to electronic white board based marking and/or writing.

The embodiments of the disclosure provide an assisting device, which may include: a memory, a processor and a computer program which is stored on the memory and capable of running on the processor. When executed by the processor, the computer program implements the method for realizing remote assistance performed by the assisting device.

The embodiments of the disclosure provide an assistance requesting device, which may include: a memory, a processor and a computer program which is stored on the memory and capable of running on the processor. When executed by the processor, the computer program implements the method for realizing remote assistance performed by the assistance requesting device.

The embodiments of the disclosure provide an assisting server, which may include: a memory, a processor and a computer program which is stored on the memory and capable of running on the processor. When executed by the processor, the computer program implements the method for realizing remote assistance performed by the assisting server.

The embodiments of the disclosure provide a third-party assisting device, which may include: a memory, a processor and a computer program which is stored on the memory and capable of running on the processor. When executed by the processor, the computer program implements the method for realizing remote assistance performed by the third-party assisting device.

The embodiments of the disclosure provide a system for realizing remote assistance, which may include: the assisting device and the assistance requesting device.

The embodiments of the disclosure provide a computer-readable storage medium, which stores an information processing program. When executed by the processor, the information processing program implements the operations of any above method for realizing remote assistance.

### Brief Description of the Drawings

The accompanying drawings described herein are used to provide a deeper understanding of the present disclosure, and constitute a part of the present application. The exemplary embodiments of the present disclosure and the description thereof are used to explain the present disclosure. The drawings and the exemplary embodiment do not constitute limitations to the present disclosure. In the drawings:
Fig. 1 is a flowchart of a method for realizing remote assistance provided by the first embodiment of the disclosure;
Fig. 2 is a flowchart of a method for realizing remote assistance provided by the second embodiment of the disclosure;
Fig. 3 is a flowchart of a method for realizing remote assistance provided by the third embodiment of the disclosure;
Fig. 4 is a flowchart of a method for realizing remote assistance provided by the fourth embodiment of the disclosure;
Fig. 5 is a flowchart of a method for realizing remote assistance provided by the fifth embodiment of the disclosure;
Fig. 6 is a flowchart of a method for realizing remote assistance provided by the sixth embodiment of the disclosure;
Fig. 7 is a flowchart of a method for realizing remote assistance provided by the seventh embodiment of the disclosure;
Fig. 8 is a flowchart of a method for realizing remote assistance provided by the eighth embodiment of the disclosure;
Fig. 9 is a flowchart of a method for realizing remote assistance provided by the ninth embodiment of the disclosure;
Fig. 10 is a flowchart of a method for realizing remote assistance provided by the tenth embodiment of the disclosure;
Fig. 11 is a flowchart of a method for realizing remote assistance provided by the eleventh embodiment of the disclosure;
Fig. 12 is a structure diagram of an assisting device provided by the twelfth embodiment of the disclosure;
Fig. 13 is a structure diagram of an assistance requesting device provided by the thirteenth embodiment of the disclosure;
Fig. 14 is a structure diagram of an assisting server provided by the fourteenth embodiment of the disclosure;
Fig. 15 is a structure diagram of a third-party assisting device provided by the fifteenth embodiment of the disclosure;
Fig. 16 is a structure diagram of another assisting server provided by the sixteenth embodiment of the disclosure;
Fig. 17 is a structure diagram of another assistance requesting device provided by the seventeenth embodiment of the disclosure;
Fig. 18 is a structure diagram of a system for realizing remote assistance provided by an embodiment of the disclosure; and
Fig. 19 is a structure diagram of another system for realizing remote assistance provided by an embodiment of the disclosure.

### Detailed Description

In order to make the purpose, technical solutions and advantages of the disclosure clearer, the present disclosure is described below in detail with reference to the drawings and in conjunction with the embodiments. It is to be noted that embodiments in the present application and characteristics in the embodiments may be combined to derive other embodiments not explicitly described.

These operations shown in the flowchart of the accompanying drawings can be executed in a computer system like a group of computer executable instructions. Moreover, although a logical sequence is shown in the flowchart, in some cases, the shown or described operations can be performed in a sequence different from that described herein.

In a video conference, audio and video data of all parties in the conference are transmitted mainly through an IP network, while YUV data collected by a camera is very large, measured at 10 megabits per second. The data almost cannot be transmitted over a limited network bandwidth, so a certain technology is needed to compress it before it is sent over the network and decompress it after it is received. At present, the H.26x algorithm is usually used for video compression. By using the latest H.265 algorithm, 720p30fps can be compressed to about 256k, which provides real-time video application in a mobile network with technical conditions.

In a video service, a video stream can be composited or superimposed according to the user's requirements before it is sent to an end user; for example, the video stream pushed to the user may be superimposed with a picture and other information, and except remote real-time video information, the end user can also see the information superimposed by a video service system, such as the name of the meeting place.

The main problem of the schemes for remote assistance in the related art is that the means of assistance are limited and it is impossible to transmit an instruction of an assisting party to the assisted party (an assistance requesting party) accurately and in real time.

An interactive electronic white board is a new technology of remote assistance. After the users access the server through various networks, members of each party can write on a "white board", and at the same time, the members of each party can see the data written by other members, which creates a virtual scene where the members of each party write and discuss on "a white board".

The technical solution provided by the embodiments of the disclosure adopts a real-time video stream synthesis technology and an electronic white board technology to design a technical scheme for remote assistance based on a real-time video stream.

### First embodiment

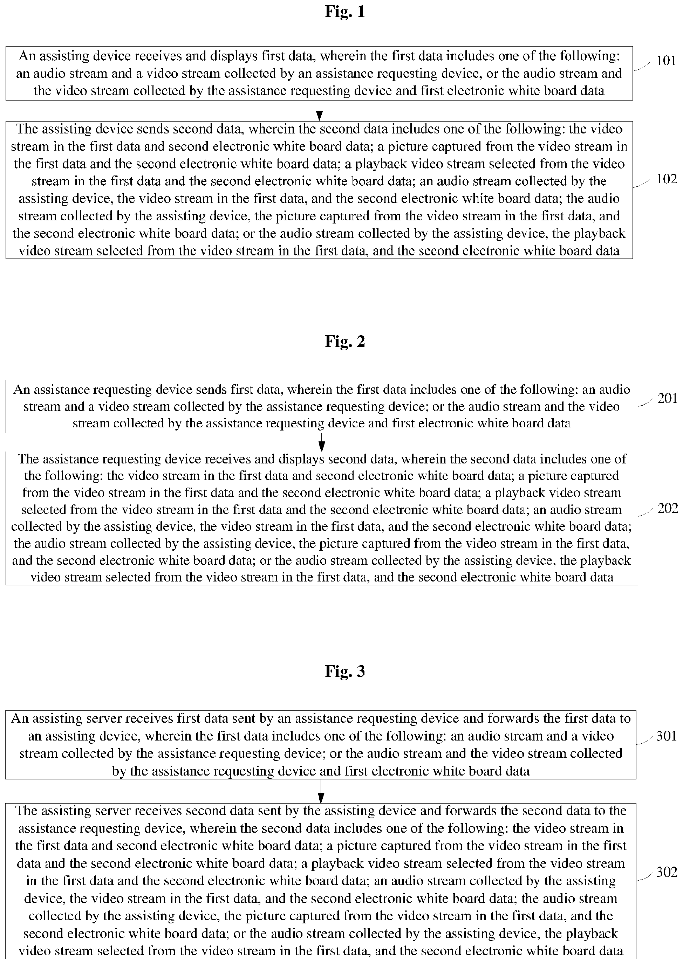

Fig. 1 is a flowchart of a method for realizing remote assistance provided by the first embodiment of the disclosure. As shown in Fig. 1, the method includes the following operation 101 to operation 102.

At operation 101, an assisting device receives and displays first data, wherein the first data includes one of the following: an audio stream and a video stream collected by an assistance requesting device, or the audio stream and the video stream collected by the assistance requesting device and first electronic white board data.

At operation 102, the assisting device sends second data, wherein the second data includes one of the following: the video stream in the first data and second electronic white board data; a picture captured from the video stream in the first data and the second electronic white board data; a playback video stream selected from the video stream in the first data and the second electronic white board data; an audio stream collected by the assisting device, the video stream in the first data, and the second electronic white board data; the audio stream collected by the assisting device, the picture captured from the video stream in the first data, and the second electronic white board data; or the audio stream collected by the assisting device, the playback video stream selected from the video stream in the first data, and the second electronic white board data.

In a case where the first data includes the audio stream and the video stream collected by the assistance requesting device and the first electronic white board data, the operation that the assisting device displays the first data includes that: the audio stream and the video stream collected by the assistance requesting device and the first electronic white board data are superimposed and synthesized for display.

The first electronic white board data is information marked and/or written by an assistance requesting party on the video stream collected by the assistance requesting device. The second electronic white board data is information marked and/or written by an assisting party on the video stream in the first data, or information marked and/or written by the assisting party on the picture captured from the video stream in the first data, or information marked and/or written by the assisting party on the playback video stream selected from the video stream in the first data.

Before the assisting device receives the first data, the method may further include that: the assisting device establishes a connection channel with the assistance requesting device, wherein the first data is received through the connection channel and the second data is sent through the connection channel.

Before the assisting device receives the first data, the method may further include that: the assisting device establishes a connection with the assistance requesting device through an assisting server, wherein the first data is received through the assisting server and the second data is sent through the assisting server.

After the assisting device receives and displays the first data, the method may further include that: a first request is sent to at least one third-party assisting device, wherein the first request is used for requesting a third party to participate in assistance.

### Second embodiment

Fig. 2 is a flowchart of a method for realizing remote assistance provided by the second embodiment of the disclosure. As shown in Fig. 2, the method includes the following operation 201 to operation 202.

At operation 201, an assistance requesting device sends first data, wherein the first data includes one of the following: an audio stream and a video stream collected by the assistance requesting device; or the audio stream and the video stream collected by the assistance requesting device and first electronic white board data.

At operation 202, the assistance requesting device receives and displays second data, wherein the second data includes one of the following: the video stream in the first data and second electronic white board data; a picture captured from the video stream in the first data and the second electronic white board data; a playback video stream selected from the video stream in the first data and the second electronic white board data; an audio stream collected by the assisting device, the video stream in the first data, and the second electronic white board data; the audio stream collected by the assisting device, the picture captured from the video stream in the first data, and the second electronic white board data; or the audio stream collected by the assisting device, the playback video stream selected from the video stream in the first data, and the second electronic white board data.

In a case where the second data includes the video stream in the first data and the second electronic white board data, the operation that the assistance requesting device displays the second data includes that: the video stream in the first data and the second electronic white board data are superimposed and synthesized for display. Alternatively, in a case where the second data includes the picture captured from the video stream in the first data and the second electronic white board data, the operation that the assistance requesting device displays the second data includes that: the picture captured from the video stream in the first data and the second electronic white board data are superimposed and synthesized for display. Alternatively, in a case where the second data includes the playback video stream selected from the video stream in the first data and the second electronic white board data, the operation that the assistance requesting device displays the second data includes that: the playback video stream selected from the video stream in the first data and the second electronic white board data are superimposed and synthesized for display.

The first electronic white board data is information marked and/or written by an assistance requesting party on the video stream collected by the assistance requesting device. The second electronic white board data is information marked and/or written by the assisting party on the video stream in the first data, or information marked and/or written by the assisting party on the picture captured from the video stream in the first data, or information marked and/or written by the assisting party on the playback video stream selected from the video stream in the first data.

Before the assistance requesting device sends the first data, the method may further include that: the assistance requesting device establishes a connection channel with the assisting device, wherein the first data is sent through the connection channel and the second data is received through the connection channel.

Before the assistance requesting device sends the first data, the method may further include that: the assistance requesting device establishes a connection with the assisting device through an assisting server, wherein the first data is sent through the assisting server and the second data is received through the assisting server.

### Third embodiment

Fig. 3 is a flowchart of a method for realizing remote assistance provided by the third embodiment of the disclosure. As shown in Fig. 3, the method includes the following operation 301 to operation 302.

At operation 301, an assisting server receives first data sent by an assistance requesting device and forwards the first data to an assisting device, wherein the first data includes one of the following: an audio stream and a video stream collected by the assistance requesting device; or the audio stream and the video stream collected by the assistance requesting device and first electronic white board data.

At operation 302, the assisting server receives second data sent by the assisting device and forwards the second data to the assistance requesting device, wherein the second data includes one of the following: the video stream in the first data and second electronic white board data; a picture captured from the video stream in the first data and the second electronic white board data; a playback video stream selected from the video stream in the first data and the second electronic white board data; an audio stream collected by the assisting device, the video stream in the first data, and the second electronic white board data; the audio stream collected by the assisting device, the picture captured from the video stream in the first data, and the second electronic white board data; or the audio stream collected by the assisting device, the playback video stream selected from the video stream in the first data, and the second electronic white board data. The first electronic white board data is information marked and/or written by an assistance requesting party on the video stream collected by the assistance requesting device. The second electronic white board data is information marked and/or written by the assisting party on the video stream in the first data, or information marked and/or written by the assisting party on the picture captured from the video stream in the first data, or information marked and/or written by the assisting party on the playback video stream selected from the video stream in the first data.

Before the assisting server receives the first data sent by the assistance requesting device, the method may further include that: an assistance request sent by the assistance requesting device is received; and the corresponding assisting device is assigned to the assistance requesting device, and an online connection is established for the assistance requesting device and the assisting device.

The technical solutions provided by the first embodiment, the second embodiment and the third embodiment of the disclosure are elaborated below through four specific embodiments.

### Fourth embodiment

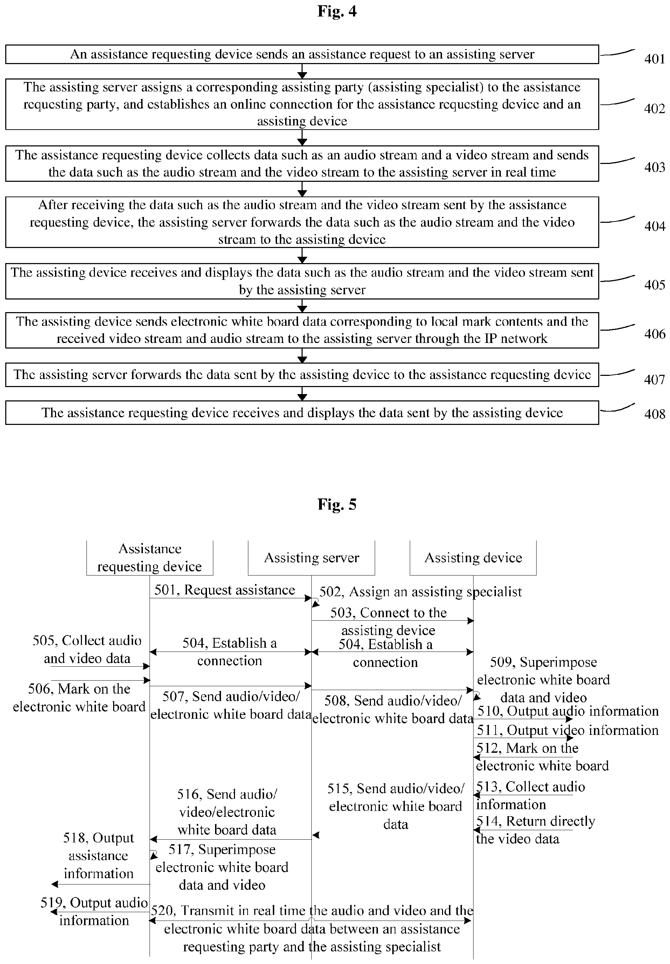

Fig. 4 is a flowchart of a method for realizing remote assistance provided by the fourth embodiment of the disclosure. As shown in Fig. 4, the method includes the following operation 401 to operation 408.

At operation 401, an assistance requesting device sends an assistance request to an assisting server. An assistance requesting party, when finding that the assistance requesting party cannot solve the problem and needs assistance, applies for assistance to the assisting server (assisting system) through the assistance requesting device.

At operation 402, the assisting server assigns a corresponding assisting party (assisting specialist) to the assistance requesting party, and establishes an online connection for the assistance requesting device and the assisting device. The online connections, such as a video call or an online conference, may be established for the assistance requesting device and the assisting device with the consent of the assisting party (assisting specialist).

At operation 403, the assistance requesting device collects data such as an audio stream and a video stream and sends the data such as the audio stream and the video stream to the assisting server in real time. The assistance requesting party may use a site device (which may be either a professional devices or APP of a mobile device) to collect audios and videos in real time.

In addition, the content of the electronic white board may be marked and/or written on the site device, and the collected audio stream and video stream and the content of the electronic white board are sent to the assisting server through the IP network.

For example, the assistance requesting party collects a sound and video signal on site through the device, the assistance requesting party marks the specific problem on the local video stream if necessary, and the assistance requesting device sends the electronic white board data corresponding to the mark (stroke information on a transparent canvas) on the local video stream and the collected audio stream and video stream to the assisting server through the IP network.

At operation 404, after receiving the data such as the audio stream and the video stream sent by the assistance requesting device, the assisting server forwards the data such as the audio stream and the video stream to the assisting device. The data such as the audio stream and the video stream may be transmitted using the already established online connection.

At operation 405, the assisting device receives and displays the data such as the audio stream and the video stream sent by the assisting server. If the data such as the audio stream and the video stream received include the electronic white board data, the electronic white board data with the written information and the video stream may be superimposed and/or synthesized through a video synthesis technology for display. In this way, the assisting party (assisting specialist) can view in real time the specific situation of the site and the fault point initially suspected by the assistance requesting party, give a specific diagnosis advice based on his/her/its own ability and experience, and mark the specific location of the problem and other information in real time.

At operation 406, the assisting device sends electronic white board data corresponding to local mark contents and the received video stream and audio stream to the assisting server through the IP network. The assisting party (assisting specialist) may write (e.g. the stroke information on the transparent canvas) on the assisting device (which may be either a professional device or APP of the mobile device) based on his/her/its own ability and experience, and push the stroke information to the assistance requesting party in real time.

At operation 407, the assisting server forwards the data sent by the assisting device to the assistance requesting device.

At operation 408, the assistance requesting device receives and displays the data sent by the assisting device. The assistance requesting device receives the audio stream and the video stream and electronic white board information of the assisting party, and synthesizes the video stream and the electronic white board information into a video for display. The assistance requesting party can see assistance information of the assisting party in the field situation.

In this way, the assistance requesting party watches the video stream, acquires the assistance information, and completes the whole assistance requesting process. If the assistance requesting party still has questions, operation 403 to operation 408 can be repeated to complete the whole assistance requesting process.

With the technical solution provided by the fourth embodiment of the disclosure, by using a common media connection based on the real-time transmission principle of video conference, the assistance requesting party can obtain a wealth of assistance ways, including online voice assistance, online video assistance, and the superposition of the electronic white board on the real-time video content of the assistance requesting party made by the assisting party, which makes the remote assistance more efficient and accurate, and improves the accuracy and efficiency of the remote assistance.

### Fifth embodiment

Fig. 5 is a flowchart of a method for realizing remote assistance provided by the fifth embodiment of the disclosure. As shown in Fig. 5, the method includes the following operation 501 to operation 520.

At operation 501, an assistance requesting device sends an assistance request to an assisting server. When having problems, an assistance requesting party may request assistance from the assisting server (assisting system) through a portable device (which may be either a professional device or APP software).

At operation 502, the assisting server assigns an assisting party (assisting specialist) to the assistance requesting party. An assisting party (assisting specialist) information base may be pre-stored in the assisting server. After the assistance request is received, the assisting party is selected from the assisting party information base according to a certain principle.

At operation 503, the assisting server connects to the assisting device. The assisting server may connect to the assisting device according to the information of the selected assisting party, and ask if the assisting party agrees to assist. If the assisting party agrees to assist, operation 504 is performed. If the assisting party does not agree to assist, another assisting party may be selected, or the assisting server refuses to assist the assistance requesting party.

At operation 504, a connection is established for the assistance requesting device and the assisting device. The connection may be established for the assistance requesting device and the assisting device according to the information of the selected assisting party. The established connection may be various forms of online connection, such as creating a video conference.

At operation 505, the assistance requesting party collects real-time audio and video data by means of a device. The assistance requesting party may collect the real-time audio and video data on site by means of a professional device or APP software on the mobile device, and operation 506 may also be performed if needed.

At operation 506, electronic white board data is marked and/or written on the local video collected. The electronic white board data may be the questions of the assistance requesting party and other information, such as suspicion of fault of a certain device in the field network, which may be convenient for the assisting party to analyze quickly. This operation is optional.

At operation 507, the assistance requesting device sends the collected data such as audio data and video data to the assisting server. The data sent may include the audio data and video data, as well as the white board data.

At operation 508, the assisting server forwards the received data such as the audio data and video data to the assisting device. The above sending or forwarding may be performed through the connection (channel) already established in operation 504.

At operation 509 to operation 511, the assisting device plays audio information and video information received, and if there is any electronic white board data, the assisting device superimposes and synthesizes the electronic white board data and the video for display.

At operation 512, the assisting party provides a further analysis based on his/her/its own skills and experience, and directly marks and/or writes the new electronic white board data on the received video. The new electronic white board data, for example, may be obtained by directly circling the position of a certain single board by analyzing the abnormal flashing situation of a single board signal light on a certain device.

At operation 513 to operation 515, the assisting device may send the collected audio stream, the written and/or marked electronic white board data and the received video stream to the assisting server through the connection or channel already established in operation 504.

At operation 516, the assisting server forwards the received data sent by the assisting device to the assistance requesting device.

At operation 517 to operation 519, the assistance requesting device plays the received audio information, and superimposes and synthesizes the received electronic white board data and video for display.

At operation 520, if the assistance requesting party still has questions, operation 505 to operation 519 are repeated to complete the whole assistance requesting process.

With the technical solution provided by the fifth embodiment of the disclosure, the audio data, the video data and the electronic white board data are transmitted in real time in the network, and the assistance requesting party and the assisting specialist may mark and/or write on the "white board" in real time, which realizes the assistance of real-time video stream; and the assisting party superposes the electronic white board on the real-time video content of the assistance requesting party, which makes the remote assistance more efficient and accurate.

### Sixth embodiment

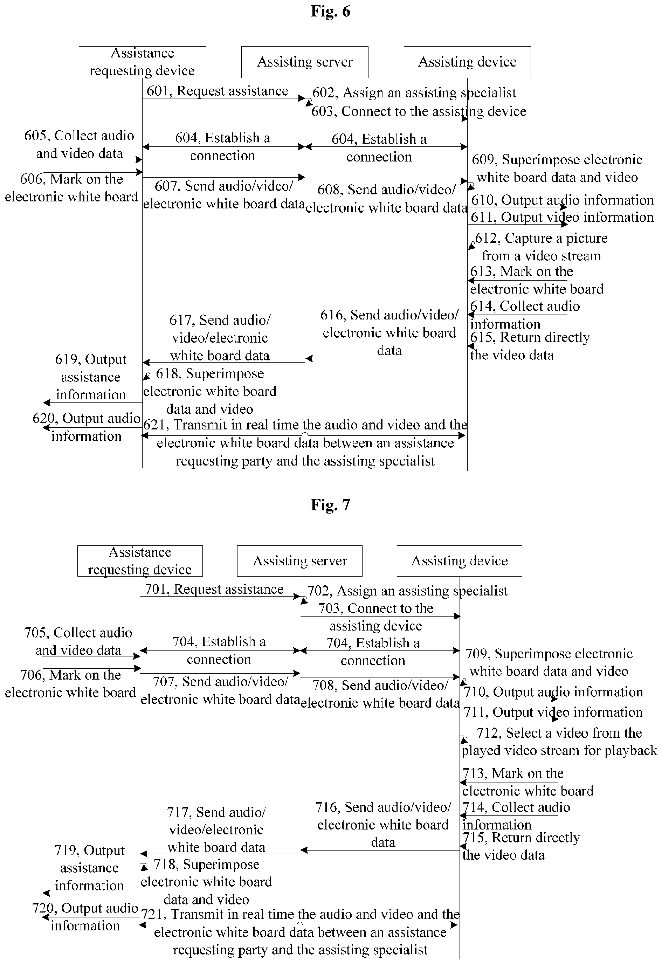

Fig. 6 is a flowchart of a method for realizing remote assistance provided by the sixth embodiment of the disclosure. As shown in Fig. 6, the method includes the following operation 601 to operation 621.

At operation 601, an assistance requesting device sends an assistance request to an assisting server. When having problems, an assistance requesting party may request assistance from the assisting server (assisting system) through a portable device (which may be either a professional device or APP software).

At operation 602, the assisting server assigns an assisting party (assisting specialist) to the assistance requesting party. An assisting party (assisting specialist) information base may be pre-stored in the assisting server. After the assistance request is received, the assisting party is selected from the assisting party information base according to a certain principle.

At operation 603, the assisting server connects to the assisting device. The assisting server may connect to the assisting device according to the information of the selected assisting party, and ask if the assisting party agrees to assist. If the assisting party agrees to assist, operation 504 is performed. If the assisting party does not agree to assist, another assisting party may be selected, or the assisting server refuses to assist the assistance requesting party.

At operation 604, the connection is established for the assistance requesting device and the assisting device. The connection may be established for the assistance requesting device and the assisting device according to the information of the selected assisting party. The established connection may be various forms of online connection, such as creating a video conference.

At operation 605, the assistance requesting party collects real-time audio and video data by means of a device. The assistance requesting party may collect the real-time audio and video data on site by means of a professional device or APP software on the mobile device, and operation 606 may also be performed if needed.

At operation 606, electronic white board data is marked and/or written on the local video collected. The electronic white board data may be the questions of the assistance requesting party and other information, such as suspicion of fault of a certain device in the field network, which may be convenient for the assisting party to analyze quickly. This operation is optional.

At operation 607, the assistance requesting device sends the collected data such as audio data and video data to the assisting server. The data sent may include the audio data and video data, as well as the white board data.

At operation 608, the assisting server forwards the received data such as the audio data and video data to the assisting device. The above sending or forwarding may be performed through the connection (channel) already established in operation 604.

At operation 609 to operation 611, the assisting device plays the audio information and video information received, and if there is any electronic white board data, the assisting device superimposes and synthesizes the electronic white board data and the video for display.

At operation 612 to operation 613, the assisting party captures one or more pictures from the video based on his/her/its own skills and experience, provides a further analysis, and directly marks and/or writes the new electronic white board data on the captured pictures. The new electronic white board data, for example, may be that there is a problem in a certain waveform of an oscilloscope, and the position of the problem is directly marked.

At operation 614 to operation 616, the assisting device sends the collected audio stream, the written and/or marked electronic white board data and the captured pictures to the assisting server. The captured pictures may be encoded into a video stream for transmission. The collected audio stream, the written and/or marked electronic white board data and the captured pictures may be sent to the assisting server through the connection or channel already established in operation 604.

At operation 617, the assisting server forwards the received data sent by the assisting device to the assistance requesting device.

At operation 618 to operation 620, the assistance requesting device plays the received audio information, and superimposes and synthesizes the received electronic white board data and video (the captured pictures) for display.

At operation 621, if the assistance requesting party still has questions, operation 605 to operation 620 are repeated to complete the whole assistance requesting process.

With the technical solution provided by the sixth embodiment of the disclosure, the audio data, the video data and the electronic white board data are transmitted in real time in the network, and the assistance requesting party and the assisting specialist may mark and/or write on the "white board" in real time, which realizes the assistance of capturing pictures in the video; and the assisting party superposes the electronic white board after capturing pictures from the real-time video content of the assistance requesting party, which makes the remote assistance more efficient and accurate.

### Seventh embodiment

Fig. 7 is a flowchart of a method for realizing remote assistance provided by the seventh embodiment of the disclosure. As shown in Fig. 7, the method includes the following operation 701 to operation 721.

At operation 701, an assistance requesting device sends an assistance request to an assisting server. When having problems, an assistance requesting party may request assistance from the assisting server (assisting system) through a portable device (which may be either a professional device or APP software).

At operation 702, the assisting server assigns an assisting party (assisting specialist) to the assistance requesting party. An assisting party (assisting specialist) information base may be pre-stored in the assisting server. After the assistance request is received, the assisting party is selected from the assisting party information base according to a certain principle.

At operation 703, the assisting server connects to the assisting device. The assisting server may connect to the assisting device according to the information of the selected assisting party, and ask if the assisting party agrees to assist. If the assisting party agrees to assist, operation 704 is performed. If the assisting party does not agree to assist, another assisting party may be selected, or the assisting server refuses to assist the assistance requesting party.

At operation 704, the connection is established for the assistance requesting device and the assisting device. The connection may be established for the assistance requesting device and the assisting device according to the information of the selected assisting party. The established connection may be various forms of online connection, such as creating a video conference.

At operation 705, the assistance requesting party collects real-time audio and video data by means of a device. The assistance requesting party may collect the real-time audio and video data on site by means of a professional device or APP software on the mobile device, and operation 706 may also be performed if needed.

At operation 706, electronic white board data is marked and/or written on the local video collected. The electronic white board data may be the questions of the assistance requesting party and other information, such as suspicion of fault of a certain device in the field network, which may be convenient for the assisting party to analyze quickly. This operation is optional.

At operation 707, the assistance requesting device sends the collected data such as audio data and video data to the assisting server. The data sent may include the audio data and video data, as well as the white board data.

At operation 708, the assisting server forwards the received data such as the audio data and video data to the assisting device. The above sending or forwarding may be performed through the connection (channel) already established in operation 704.

At operation 709 to operation 711, the assisting device plays the audio information and video information received, and if there is any electronic white board data, the assisting device superimposes and synthesizes the electronic white board data and the video for display.

At operation 712 to operation 713, the assisting specialist selects a video from the played video stream for playback based on his/her/its own skills and experience, gives a further analysis, and directly marks on the playback video stream and writes the new electronic white board data.

At operation 714 to operation 716, the assisting device sends the collected audio stream, the written and/or marked electronic white board data and the playback video stream to the assisting server. The playback video stream may be encoded into a video stream for transmission. The collected audio stream, the written and/or marked electronic white board data and the captured pictures may be sent to the assisting server through the connection or channel already established in operation 704.

At operation 717, the assisting server forwards the received data sent by the assisting device to the assistance requesting device.

At operation 718 to operation 720, the assistance requesting device plays the received audio information, and superimposes and synthesizes the received electronic white board data and video (the playback video stream) for display.

At operation 721, if the assistance requesting party still has questions, operation 705 to operation 720 are repeated to complete the whole assistance requesting process.

With the technical solution provided by the seventh embodiment of the disclosure, the audio data, the video data and the electronic white board data are transmitted in real time in the network, and the assistance requesting party and the assisting specialist may mark and/or write on the "white board" in real time, which realizes the assistance of playing back the video stream; and the assisting party superposes the electronic white board after selecting the playback video stream from the real-time video content of the assistance requesting party, which makes the remote assistance more efficient and accurate.

### Eighth embodiment

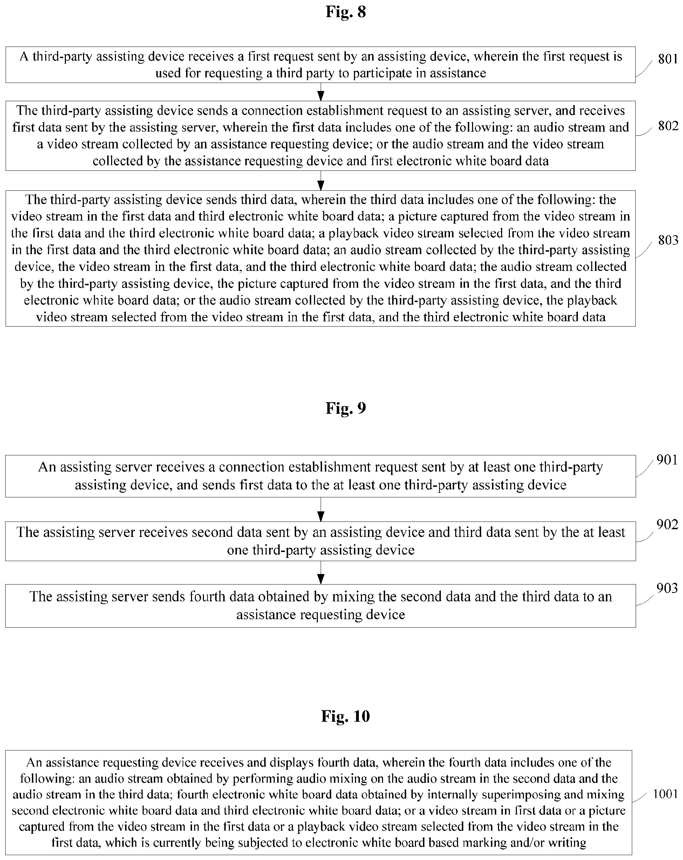

Fig. 8 is a flowchart of a method for realizing remote assistance provided by the eighth embodiment of the disclosure. As shown in Fig. 4, the method includes the following operation 801 to operation 803.

At operation 801, a third-party assisting device receives a first request sent by an assisting device, wherein the first request is used for requesting a third party to participate in assistance.

At operation 802, the third-party assisting device sends a connection establishment request to an assisting server, and receives first data sent by the assisting server, wherein the first data includes one of the following: an audio stream and a video stream collected by the assistance requesting device; or the audio stream and the video stream collected by the assistance requesting device and first electronic white board data.

At operation 803, the third-party assisting device sends third data, wherein the third data includes one of the following: the video stream in the first data and third electronic white board data; a picture captured from the video stream in the first data and the third electronic white board data; a playback video stream selected from the video stream in the first data and the third electronic white board data; an audio stream collected by the third-party assisting device, the video stream in the first data, and the third electronic white board data; the audio stream collected by the third-party assisting device, the picture captured from the video stream in the first data, and the third electronic white board data; or the audio stream collected by the third-party assisting device, the playback video stream selected from the video stream in the first data, and the third electronic white board data.

The first electronic white board data is information marked and/or written by an assistance requesting party on the video stream collected by the assistance requesting device. The third electronic white board data is information marked and/or written by the third party on the video stream in the first data, or information marked and/or written by the third party on the picture captured from the video stream in the first data, or information marked and/or written by the third party on the playback video stream selected from the video stream in the first data.

### Ninth embodiment

Fig. 9 is a flowchart of a method for realizing remote assistance provided by the ninth embodiment of the disclosure. As shown in Fig. 9, the method includes the following operation 901 to operation 903.

At operation 901, an assisting server receives a connection establishment request sent by at least one third-party assisting device, and sends first data to the at least one third-party assisting device.

At operation 902, the assisting server receives second data sent by an assisting device and third data sent by the at least one third-party assisting device.

At operation 903, the assisting server sends fourth data obtained by mixing the second data and the third data to an assistance requesting device.

The first data includes one of the following: an audio stream and a video stream collected by the assistance requesting device; or the audio stream and the video stream collected by the assistance requesting device and first electronic white board data. The second data includes one of the following: the video stream in the first data and second electronic white board data; a picture captured from the video stream in the first data and the second electronic white board data; a playback video stream selected from the video stream in the first data and the second electronic white board data; an audio stream collected by the assisting device, the video stream in the first data, and the second electronic white board data; the audio stream collected by the assisting device, the picture captured from the video stream in the first data, and the second electronic white board data; or the audio stream collected by the assisting device, the playback video stream selected from the video stream in the first data, and the second electronic white board data. The third data includes one of the following: the video stream in the first data and third electronic white board data; a picture captured from the video stream in the first data and the third electronic white board data; a playback video stream selected from the video stream in the first data and the third electronic white board data; an audio stream collected by the third-party assisting device, the video stream in the first data, and the third electronic white board data; the audio stream collected by the third-party assisting device, the picture captured from the video stream in the first data, and the third electronic white board data; or the audio stream collected by the third-party assisting device, the playback video stream selected from the video stream in the first data, and the third electronic white board data.

The first electronic white board data is information marked and/or written by an assistance requesting party on the video stream collected by the assistance requesting device. The second electronic white board data is information marked and/or written by the assisting party on the video stream in the first data, or information marked and/or written by the assisting party on the picture captured from the video stream in the first data, or information marked and/or written by the assisting party on the playback video stream selected from the video stream in the first data. The third electronic white board data is information marked and/or written by the at least one third party on the video stream in the first data, or information marked and/or written by the at least one third party on the picture captured from the video stream in the first data, or information marked and/or written by the at least one third party on the playback video stream selected from the video stream in the first data.

The fourth data includes one of the following: an audio stream obtained by performing audio mixing on the audio stream in the second data and the audio stream in the third data; fourth electronic white board data obtained by internally superimposing and mixing the second electronic white board data and the third electronic white board data; or a video stream in first data or a picture captured from the video stream in the first data or a playback video stream selected from the video stream in the first data, which is currently being subjected to electronic white board based marking and/or writing.

Before the assisting server receives the connection establishment request sent by at least one third-party assisting device, the method may further include that: the first data sent by the assistance requesting device is received, and the first data is forwarded to the assisting device.

### Tenth embodiment

Fig. 10 is a flowchart of a method for realizing remote assistance provided by the tenth embodiment of the disclosure. As shown in Fig. 10, the method includes the following operation 1001.

At operation 1001, an assistance requesting device receives and displays fourth data, wherein the fourth data includes one of the following: an audio stream obtained by performing audio mixing on audio stream in second data and audio stream in third data; fourth electronic white board data obtained by internally superimposing and mixing second electronic white board data and third electronic white board data; or a video stream in first data or a picture captured from the video stream in the first data or a playback video stream selected from the video stream in the first data, which is currently being subjected to electronic white board based marking and/or writing.

Before the assistance requesting device receives the fourth data, the method may further include that: the first data is sent, wherein the first data includes one of the following: the audio stream and the video stream collected by the assistance requesting device; or the audio stream and the video stream collected by the assistance requesting device and first electronic white board data.

The second data includes one of the following: the video stream in the first data and second electronic white board data; a picture captured from the video stream in the first data and the second electronic white board data; a playback video stream selected from the video stream in the first data and the second electronic white board data; an audio stream collected by the assisting device, the video stream in the first data, and the second electronic white board data; the audio stream collected by the assisting device, the picture captured from the video stream in the first data, and the second electronic white board data; or the audio stream collected by the assisting device, the playback video stream selected from the video stream in the first data, and the second electronic white board data. The third data includes one of the following: the video stream in the first data and third electronic white board data; a picture captured from the video stream in the first data and the third electronic white board data; a playback video stream selected from the video stream in the first data and the third electronic white board data; an audio stream collected by the at least one third-party assisting device, the video stream in the first data, and the third electronic white board data; the audio stream collected by the at least one third-party assisting device, the picture captured from the video stream in the first data, and the third electronic white board data; or the audio stream collected by the at least one third-party assisting device, the playback video stream selected from the video stream in the first data, and the third electronic white board data.

The first electronic white board data is information marked and/or written by an assistance requesting party on the video stream collected by the assistance requesting device. The second electronic white board data is information marked and/or written by the assisting party on the video stream in the first data, or information marked and/or written by the assisting party on the picture captured from the video stream in the first data, or information marked and/or written by the assisting party on the playback video stream selected from the video stream in the first data. The third electronic white board data is information marked and/or written by the at least one third party on the video stream in the first data, or information marked and/or written by the at least one third party on the picture captured from the video stream in the first data, or information marked and/or written by the at least one third party on the playback video stream selected from the video stream in the first data.

The operation that the fourth data is displayed includes that: the fourth electronic white board data in the fourth data and the video stream in the first data, or the fourth electronic white board data in the fourth data and the picture captured from the first data, or the fourth electronic white board data in the fourth data and the playback video stream selected from the video stream in the first data are superimposed and synthesized for display.

The technical solutions provided by the eighth embodiment, the ninth embodiment and the tenth embodiment of the disclosure are elaborated below through a specific embodiment.

### Eleventh embodiment

If the assisting specialist cannot solve the problem, the third party or more assisting parties may be invited to join in to solve the problem of the assistance requesting party.

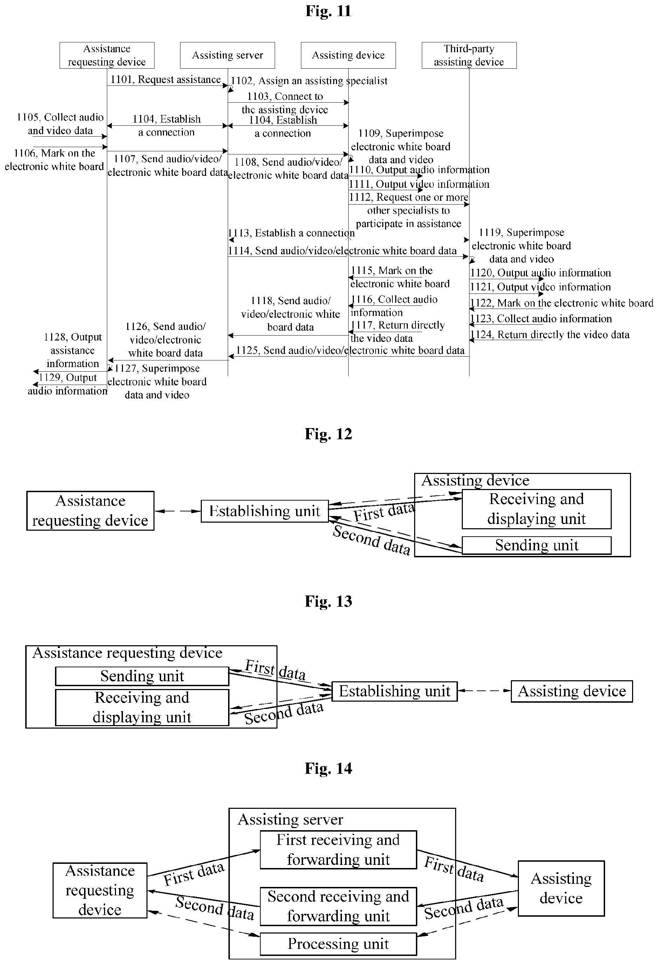

Fig. 11 is a flowchart of a method for realizing remote assistance provided by the eleventh embodiment of the disclosure. As shown in Fig. 10, the method includes the following operation 1101 to operation 1129.

At operation 1101, an assistance requesting device sends an assistance request to an assisting server. When having problems, an assistance requesting party may request assistance from the assisting server (assisting system) through a portable device (which may be either a professional device or APP software).

At operation 1102, the assisting server assigns an assisting party (assisting specialist) to the assistance requesting party. An assisting party (assisting specialist) information base may be pre-stored in the assisting server. After the assistance request is received, the assisting party is selected from the assisting party information base according to a certain principle.

At operation 1103, the assisting server connects to the assisting device. The assisting server may connect to the assisting device according to the information of the selected assisting party, and ask if the assisting party agrees to assist. If the assisting party agrees to assist, operation 1104 is performed. If the assisting party does not agree to assist, another assisting party may be selected, or the assisting server refuses to assist the assistance requesting party.

At operation 1104, the connection is established for the assistance requesting device and the assisting device. The connection may be established for the assistance requesting device and the assisting device according to the information of the selected assisting party. The established connection may be various forms of online connection, such as creating a video conference.

At operation 1105, the assistance requesting party collects real-time audio and video data by means of a device. The assistance requesting party may collect the real-time audio and video data on site by means of a professional device or APP software on the mobile device, and operation 1106 may also be performed if needed.

At operation 1106, electronic white board data is marked and/or written on the local video collected. The electronic white board data may be the questions of the assistance requesting party and other information, such as suspicion of fault of a certain device in the field network, which may be convenient for the assisting party to analyze quickly. This operation is optional.

At operation 1107, the assistance requesting device sends the collected data such as audio data and video data to the assisting server. The data sent may include the audio data and video data, as well as the white board data.

At operation 1108, the assisting server forwards the received data such as the audio data and video data to the assisting device. The above sending or forwarding may be performed through the connection (channel) already established in operation 1104.

At operation 1109 to operation 1111, the assisting device plays the audio information and video information received, and if there is any electronic white board data, the assisting device superimposes and synthesizes the electronic white board data and the video for display.

At operation 1112, if the assisting party cannot solve the problem based on his/her/its own skills and experience, the assisting party may invite the third party (a third-party assisting specialist) to assist. The assisting party may connect to the third-party assisting device and ask if the third party agrees to assist. If the third party agrees to assist, operation 1013 is performed.

At operation 1113, the third-party assisting device and the assisting server establish a connection, and join the connection between the assistance requesting party and the assisting party. For example, the connection between the assistance requesting party and the assisting party may be an online video conference, and the third party may join an online multi-point conference.

At operation 1114, the assisting server forwards the data sent by the assistance requesting party to the third-party assisting device.

At operation 1115 to operation 1118, the assisting device sends the collected audio stream, the written and/or marked electronic white board data and the received video stream to the assisting server. The assisting party may give a further analysis on the video stream based on his/her/its own skills and experience, and directly marks and/or writes the electronic white board data on the video stream. The collected audio stream, the written and/or marked electronic white board data and the received video stream may be sent to the assisting server through the connection or channel already established in operation 1104.

At operation 1119 to operation 1121, the third-party assisting device plays the audio information and video information received, and if there is any electronic white board data, the third-party assisting device superimposes and synthesizes the electronic white board data and the video for display.

At operation 1122 to operation 1125, the third-party assisting device sends the collected audio stream, the written and/or marked electronic white board data and the received video stream to the assisting server. The third party may give a further analysis on the video stream based on his/her/its own skills and experience, and directly marks and/or writes the electronic white board data on the video stream. The collected audio stream, the written and/or marked electronic white board data and the received video stream may be sent to the assisting server through the connection or channel already established in operation 1113.

At operation 1126, the assisting server performs audio mixing on the received audio data, and internally superimposes and mixes the received electronic white board data, and then sends the mixing results to the assistance requesting device. For the video, if some content is being written on the "white board," the video stream from that assisting device is sent to the assistance requesting party. Because the data is transmitted in real time, if the assisting party is writing on the white board, the video data sent by the assisting party is sent to the assistance requesting party; if the third party is writing on the white board, the video data sent by the third party is sent to the assistance requesting party.

At operation 1127 to operation 1129, the assistance requesting device plays the received audio information, and superimposes and synthesizes the received electronic white board data and video for display. If the assistance requesting party still has questions, operation 1105 and operation 1129 may be repeated to complete the whole assistance requesting process.

If needing more assistance, the assisting party may repeat operation 1112 to operation 1114 and invite other third parties to participate in the assistance.

The assisting party or the third party may mark and/or write the electronic white board data on the video stream sent by the assistance requesting party. As described in the embodiments of the disclosure, the electronic white board data may also be marked and/or written by capturing the picture from the video stream sent by the assistance requesting party, and the electronic white board data may also be marked and/or written by selecting the playback video from the video stream sent by the assistance requesting party. The different assisting parties may also choose different ways to write on the white board, that is, various means of assistance may be applied in parallel.

With the technical solution provided by the eleventh embodiment of the disclosure, the audio data, the video data and the electronic white board data are transmitted in real time in the network, and the assistance requesting party and the assisting specialist may mark and/or write on the "white board" in real time, which realizes the video assistance with many parties participating in; and the assisting party superposes the electronic white board on the real-time video content of the assistance requesting party, which makes the remote assistance more efficient and accurate.

### Twelfth embodiment

Fig. 12 is a structure diagram of an assisting device provided by the twelfth embodiment of the disclosure. As shown in Fig. 12, the assisting device includes: a receiving and displaying unit and a sending unit. The receiving and displaying unit is configured to receive and display first data. The first data includes one of the following: an audio stream and a video stream collected by an assistance requesting device; or the audio stream and the video stream collected by the assistance requesting device and first electronic white board data. The sending unit is configured to send second data. The second data includes one of the following: the video stream in the first data and second electronic white board data; a picture captured from the video stream in the first data and the second electronic white board data; a playback video stream selected from the video stream in the first data and the second electronic white board data; an audio stream collected by the assisting device, the video stream in the first data, and the second electronic white board data; the audio stream collected by the assisting device, the picture captured from the video stream in the first data, and the second electronic white board data; or the audio stream collected by the assisting device, the playback video stream selected from the video stream in the first data, and the second electronic white board data.

The receiving and displaying unit is configured to superimpose and synthesize the audio stream and the video stream collected by the assistance requesting device and the first electronic white board data for display.

The first electronic white board data is information marked and/or written by an assistance requesting party on the video stream collected by the assistance requesting device. The second electronic white board data is information marked and/or written by an assisting party on the video stream in the first data, or information marked and/or written by the assisting party on the picture captured from the video stream in the first data, or information marked and/or written by the assisting party on the playback video stream selected from the video stream in the first data.

The device may further include an establishing unit, which is configured to establish a connection channel with the assistance requesting device before the assisting device receives the first data, wherein the first data is received through the connection channel and the second data is sent through the connection channel.

The device may further include an establishing unit, which is configured to establish the connection with the assistance requesting device through an assisting server, wherein the first data is received through the assisting server and the second data is sent through the assisting server.

The sending unit is configured to send, after the assisting device receives and displays the first data, the first request to at least one third-party assisting device, wherein the first request is used for requesting a third party to participate in assistance.

### Thirteenth embodiment

Fig. 13 is a structure diagram of an assistance requesting device provided by the thirteenth embodiment of the disclosure. As shown in Fig. 13, the assistance requesting device includes: a sending unit, and a receiving and displaying unit. The sending unit is configured to send first data. The first data includes one of the following: an audio stream and a video stream collected by an assistance requesting device; or the audio stream and the video stream collected by the assistance requesting device and first electronic white board data. The receiving and displaying unit is configured to receive and display second data. The second data includes one of the following: the video stream in the first data and second electronic white board data; a picture captured from the video stream in the first data and the second electronic white board data; a playback video stream selected from the video stream in the first data and the second electronic white board data; an audio stream collected by the assisting device, the video stream in the first data, and the second electronic white board data; the audio stream collected by the assisting device, the picture captured from the video stream in the first data, and the second electronic white board data; or the audio stream collected by the assisting device, the playback video stream selected from the video stream in the first data, and the second electronic white board data.

The receiving and displaying unit is configured to, in a case where the second data includes the video stream in the first data and the second electronic white board data, superimpose and synthesize the video stream in the first data and the second electronic white board data for display; or in a case where the second data includes the picture captured from the video stream in the first data and the second electronic white board data, superimpose and synthesize the picture captured from the video stream in the first data and the second electronic white board data for display; or in a case where the second data includes the playback video stream selected from the video stream in the first data and the second electronic white board data, superimpose and synthesize the playback video stream selected from the video stream in the first data and the second electronic white board data for display.

The first electronic white board data is information marked and/or written by an assistance requesting party on the video stream collected by the assistance requesting device. The second electronic white board data is information marked and/or written by the assisting party on the video stream in the first data, or information marked and/or written by the assisting party on the picture captured from the video stream in the first data, or information marked and/or written by the assisting party on the playback video stream selected from the video stream in the first data.

The device may further include an establishing unit, which is configured to establish, before the assistance requesting device sends the first data, a connection channel with the assisting device, wherein the first data is sent through the connection channel and the second data is received through the connection channel.

The device may further include an establishing unit, which is configured for, before the assistance requesting device sends the first data, the assistance requesting device to establish a connection with the assisting device through an assisting server, wherein the first data is sent through the assisting server and the second data is received through the assisting server.

### Fourteenth embodiment

Fig. 14 is a structure diagram of an assisting server provided by the fourteenth embodiment of the disclosure. As shown in Fig. 14, the assisting server includes: the first receiving and forwarding unit and a second receiving and forwarding unit. The first receiving and forwarding unit is configured to receive first data sent by an assistance requesting device and forward the first data to an assisting device. The first data includes one of the following: an audio stream and a video stream collected by the assistance requesting device; or the audio stream and the video stream collected by the assistance requesting device and first electronic white board data. The second receiving and forwarding unit is configured to receive second data sent by the assisting device and forward the second data to the assistance requesting device. The second data includes one of the following: the video stream in the first data and second electronic white board data; a picture captured from the video stream in the first data and the second electronic white board data; a playback video stream selected from the video stream in the first data and the second electronic white board data; an audio stream collected by the assisting device, the video stream in the first data, and the second electronic white board data; the audio stream collected by the assisting device, the picture captured from the video stream in the first data, and the second electronic white board data; or the audio stream collected by the assisting device, the playback video stream selected from the video stream in the first data, and the second electronic white board data.

The first electronic white board data is information marked and/or written by an assistance requesting party on the video stream collected by the assistance requesting device. The second electronic white board data is information marked and/or written by the assisting party on the video stream in the first data, or information marked and/or written by the assisting party on the picture captured from the video stream in the first data, or information marked and/or written by the assisting party on the playback video stream selected from the video stream in the first data.

The device may further include a processing unit, which is configured to receive, before the first data sent by the assistance requesting device is received, the assistance request sent by the assistance requesting device, assign the corresponding assisting device to the assistance requesting device, and establish an online connection for the assistance requesting device and the assisting device.

### Fifteenth embodiment

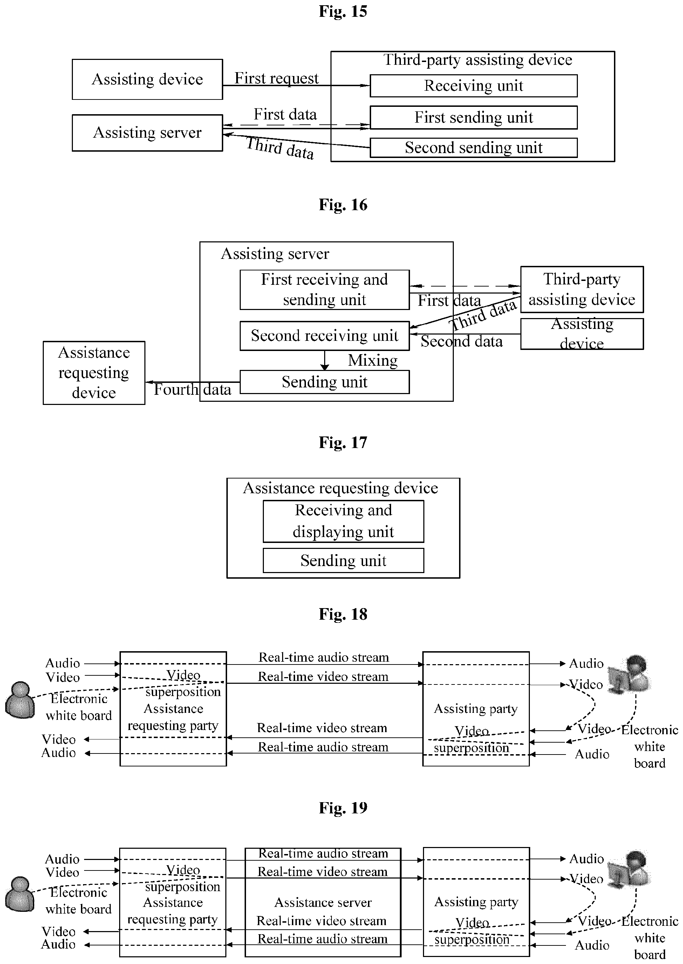

Fig. 15 is a structure diagram of a third-party assisting device provided by the fifteenth embodiment of the disclosure. As shown in Fig. 15, the third-party assisting device includes: a receiving unit, a first sending unit, and a second sending unit. The receiving unit is configured to receive first request sent by an assisting device. The first request is used for requesting a third party to participate in assistance. The first sending unit is configured to send a connection establishment request to an assisting server, and receive first data sent by the assisting server. The first data includes one of the following: an audio stream and a video stream collected by the assistance requesting device; or the audio stream and the video stream collected by the assistance requesting device and first electronic white board data. The second sending unit is configured to send third data. The third data includes one of the following: the video stream in the first data and third electronic white board data; a picture captured from the video stream in the first data and the third electronic white board data; a playback video stream selected from the video stream in the first data and the third electronic white board data; an audio stream collected by the third-party assisting device, the video stream in the first data, and the third electronic white board data; the audio stream collected by the third-party assisting device, the picture captured from the video stream in the first data, and the third electronic white board data; or the audio stream collected by the third-party assisting device, the playback video stream selected from the video stream in the first data, and the third electronic white board data.

The first electronic white board data is information marked and/or written by an assistance requesting party on the video stream collected by the assistance requesting device. The third electronic white board data is information marked and/or written by the third party on the video stream in the first data, or information marked and/or written by the third party on the picture captured from the video stream in the first data, or information marked and/or written by the third party on the playback video stream selected from the video stream in the first data.

### Sixteenth embodiment

Fig. 16 is a structure diagram of another assisting server provided by the sixteenth embodiment of the disclosure. As shown in Fig. 16, the assisting server includes: a first receiving and sending unit, a second receiving unit, and a sending unit. The first receiving and sending unit is configured to receive a connection establishment request sent by at least one third-party assisting device, and send first data to the at least one third-party assisting device. The second receiving unit is configured to receive second data sent by an assisting device and third data sent by the at least one third-party assisting device. The sending unit is configured to send fourth data obtained by mixing the second data and the third data to an assistance requesting device.

The first data includes one of the following: an audio stream and a video stream collected by the assistance requesting device; or the audio stream and the video stream collected by the assistance requesting device and first electronic white board data. The second data includes one of the following: the video stream in the first data and second electronic white board data; a picture captured from the video stream in the first data and the second electronic white board data; a playback video stream selected from the video stream in the first data and the second electronic white board data; an audio stream collected by the assisting device, the video stream in the first data, and the second electronic white board data; the audio stream collected by the assisting device, the picture captured from the video stream in the first data, and the second electronic white board data; or the audio stream collected by the assisting device, the playback video stream selected from the video stream in the first data, and the second electronic white board data. The third data includes one of the following: the video stream in the first data and third electronic white board data; a picture captured from the video stream in the first data and the third electronic white board data; a playback video stream selected from the video stream in the first data and the third electronic white board data; an audio stream collected by the at least one third-party assisting device, the video stream in the first data, and the third electronic white board data; the audio stream collected by the at least one third-party assisting device, the picture captured from the video stream in the first data, and the third electronic white board data; or the audio stream collected by the at least one third-party assisting device, the playback video stream selected from the video stream in the first data, and the third electronic white board data.

The first electronic white board data is information marked and/or written by an assistance requesting party on the video stream collected by the assistance requesting device. The second electronic white board data is information marked and/or written by the assisting party on the video stream in the first data, or information marked and/or written by the assisting party on the picture captured from the video stream in the first data, or information marked and/or written by the assisting party on the playback video stream selected from the video stream in the first data. The third electronic white board data is information marked and/or written by the at least one third party on the video stream in the first data, or information marked and/or written by the at least one third party on the picture captured from the video stream in the first data, or information marked and/or written by the at least one third party on the playback video stream selected from the video stream in the first data.

The fourth data includes one of the following: an audio stream obtained by performing audio mixing on the audio stream in the second data and the audio stream in the third data, fourth electronic white board data obtained by internally superimposing and mixing second electronic white board data and third electronic white board data; or the video stream in the first data or the picture captured from the video stream in the first data or the playback video stream selected from the video stream in the first data, which is currently being subjected to electronic white board based marking and/or writing.

The device may further include a processing unit, which is configured to receive, before the assisting server receives the connection establishment request sent by at least one third-party assisting device, the first data sent by the assistance requesting device, and forward the first data to the assisting device.

### Seventeenth embodiment

Fig. 17 is a structure diagram of another assistance requesting device provided by the seventeenth embodiment of the disclosure. As shown in Fig. 17, the assistance requesting device includes: a receiving and displaying unit, configured to receive and display fourth data. The fourth data includes: an audio stream obtained by performing audio mixing on the audio stream in the second data and the audio stream in the third data; fourth electronic white board data obtained by internally superimposing and mixing second electronic white board data and third electronic white board data; or a video stream in first data or a picture captured from the video stream in the first data or a playback video stream selected from the video stream in the first data, which is currently being subjected to electronic white board based marking and/or writing.

The device may further include a sending unit, configured to send first data before the assistance requesting device receives the fourth data. The first data includes one of the following: an audio stream and a video stream collected by an assistance requesting device; or the audio stream and the video stream collected by the assistance requesting device and first electronic white board data.

The second data includes one of the following: the video stream in the first data and second electronic white board data; a picture captured from the video stream in the first data and the second electronic white board data; a playback video stream selected from the video stream in the first data and the second electronic white board data; an audio stream collected by the assisting device, the video stream in the first data, and the second electronic white board data; the audio stream collected by the assisting device, the picture captured from the video stream in the first data, and the second electronic white board data; or the audio stream collected by the assisting device, the playback video stream selected from the video stream in the first data, and the second electronic white board data. The third data includes one of the following: the video stream in the first data and third electronic white board data; a picture captured from the video stream in the first data and the third electronic white board data; a playback video stream selected from the video stream in the first data and the third electronic white board data; an audio stream collected by the at least one third-party assisting device, the video stream in the first data, and the third electronic white board data; the audio stream collected by the at least one third-party assisting device, the picture captured from the video stream in the first data, and the third electronic white board data; or the audio stream collected by the at least one third-party assisting device, the playback video stream selected from the video stream in the first data, and the third electronic white board data.

The first electronic white board data is information marked and/or written by an assistance requesting party on the video stream collected by the assistance requesting device. The second electronic white board data is information marked and/or written by the assisting party on the video stream in the first data, or information marked and/or written by the assisting party on the picture captured from the video stream in the first data, or information marked and/or written by the assisting party on the playback video stream selected from the video stream in the first data. The third electronic white board data is information marked and/or written by the at least one third party on the video stream in the first data, or information marked and/or written by the at least one third party on the picture captured from the video stream in the first data, or information marked and/or written by the at least one third party on the playback video stream selected from the video stream in the first data.

The receiving and displaying unit is configured to superimpose and synthesize the fourth electronic white board data in the fourth data and the video stream in the first data, or the fourth electronic white board data in the fourth data and the picture captured from the first data, or the fourth electronic white board data in the fourth data and the playback video stream selected from the video stream in the first data for display.

The embodiments of the disclosure provide an assisting device, which includes: a memory, a processor and a computer program which is stored on the memory and capable of running on the processor. When executed by the processor, the computer program implements any above method for realizing remote assistance performed by the assisting device.

The embodiments of the disclosure provide an assistance requesting device, which includes: a memory, a processor and a computer program which is stored on the memory and capable of running on the processor. When executed by the processor, the computer program implements any above method for realizing remote assistance performed by the assistance requesting device.

The embodiments of the disclosure provide an assisting server, which includes: a memory, a processor and a computer program which is stored on the memory and capable of running on the processor. When executed by the processor, the computer program implements any above method for realizing remote assistance performed by the assisting server.

The embodiments of the disclosure provide a third-party assisting device, which includes: a memory, a processor and a computer program which is stored on the memory and capable of running on the processor. When executed by the processor, the computer program implements any above method for realizing remote assistance performed by the third-party assisting device.

As shown in Fig. 18, the embodiments of the disclosure provide a system for realizing remote assistance, which includes: any above assisting device and any above assistance requesting device. A connection is directly established between the assisting device and the assistance requesting device to send and receive assistance data.

As shown in Fig. 19, the embodiments of the disclosure provide another system for realizing remote assistance, which includes any above assisting device, any above assistance requesting device, and any above assisting server. A connection is established between the assisting device and the assistance requesting device through the assisting server, and the assistance data is sent and received through the assisting server.

The system may further include any above third-party assisting device.

The embodiments of the disclosure provide a computer-readable storage medium, which stores an information processing program. When executed by the processor, the information processing program implements the operations of any above method for realizing remote assistance.

Those of ordinary skill in the art may understand that all or some of the operations in the above method disclosed, the system, the functional modules/units in the device may be implemented as software, firmware, hardware and a proper combination of them. In an implementation mode of hardware, the division among the functional modules/units mentioned in the above description does not necessarily correspond to the division of physical units; for example, a physical component may have multiple functions, or a function or operation may be performed by several physical components in coordination. Some or all of the components may be implemented as software performed by a processor, for example, a digital signal processor or a microprocessor, or implemented as hardware, or implemented as an integrated circuit, for example, an application-specific integrated circuit. Such software may be distributed on computer readable media. The computer readable media may include computer storage media (or non-temporary media) and communication media (or temporary media). As those of ordinary skill in the art know, the term computer storage media include volatile and non-volatile media, and removable and un-removable media which are implemented in any method or technology for storing information (such as a computer readable instruction, a data structure, a program module or other data). The computer storage media include, but not limited to, an RAM, an ROM, an EEPROM, a flash memory or other memory technologies, a CD-ROM, a Digital Video Disk (DVD) or other optical storage, a cartridge, a tape, a disk storage or other magnetic storage devices, or any other media which may be used for storing expected information and may be accessed by a computer. Moreover, as those of ordinary skill in the art know, the communication media generally include the computer readable instruction, the data structure, the program module or other data, such as carriers or other transmission mechanisms, in a modulation data signal, and may include any information delivery media.

Although the implementation modes disclosed in the disclosure are as above, the contents are the implementation modes only adopted for facilitating understanding the disclosure, but not intended to limit the disclosure. Any skilled in the art of the disclosure may make any modification and change on implementation forms and details without departing from the spirit and scope disclosed by the disclosure, but the protection scope of the disclosure is still subject to the scope limited by the claims attached.

## Claims

1. A method for realizing remote assistance, comprising:
receiving and displaying first data by an assisting device, wherein the first data comprises one of the following: an audio stream and a video stream collected by an assistance requesting device, or the audio stream and the video stream collected by the assistance requesting device and first electronic white board data; and
sending second data by the assisting device, wherein the second data comprises one of the following: the video stream in the first data and second electronic white board data; a picture captured from the video stream in the first data and the second electronic white board data; a playback video stream selected from the video stream in the first data and the second electronic white board data; an audio stream collected by the assisting device, the video stream in the first data, and the second electronic white board data; the audio stream collected by the assisting device, the picture captured from the video stream in the first data, and the second electronic white board data; or the audio stream collected by the assisting device, the playback video stream selected from the video stream in the first data, and the second electronic white board data.

2. The method according to claim 1, wherein in a case where the first data comprises the audio stream and the video stream collected by the assistance requesting device and the first electronic white board data, displaying the first data comprises:
superimposing and synthesizing the audio stream and the video stream collected by the assistance requesting device and the first electronic white board data for display.

3. The method according to claim 1, wherein the first electronic white board data is information marked and/or written by an assistance requesting party on the video stream collected by the assistance requesting device; and
the second electronic white board data is information marked and/or written by an assisting party on the video stream in the first data, or information marked and/or written by the assisting party on the picture captured from the video stream in the first data, or information marked and/or written by the assisting party on the playback video stream selected from the video stream in the first data.

4. The method according to claim 1, wherein before receiving the first data by the assisting device, the method further comprises:
establishing, by the assisting device, a connection channel with the assistance requesting device,
wherein the first data is received through the connection channel and the second data is sent through the connection channel.

5. The method according to claim 1, wherein before receiving the first data by the assisting device, the method further comprises:
establishing, by the assisting device, a connection with the assistance requesting device through an assisting server,
wherein the first data is received through the assisting server and the second data is sent through the assisting server.

6. The method according to claim 1, wherein after receiving and displaying the first data by the assisting device, the method further comprises:
sending a first request to at least one third-party assisting device, wherein the first request is used for requesting a third party to participate in assistance.

7. A method for realizing remote assistance, comprising:
sending first data by an assistance requesting device, wherein the first data comprises one of the following: an audio stream and a video stream collected by an assistance requesting device, or the audio stream and the video stream collected by the assistance requesting device and first electronic white board data; and
receiving and displaying second data by the assistance requesting device, wherein the second data comprises one of the following: the video stream in the first data and second electronic white board data; a picture captured from the video stream in the first data and the second electronic white board data; a playback video stream selected from the video stream in the first data and the second electronic white board data; an audio stream collected by the assisting device, the video stream in the first data, and the second electronic white board data; the audio stream collected by the assisting device, the picture captured from the video stream in the first data, and the second electronic white board data; or the audio stream collected by the assisting device, the playback video stream selected from the video stream in the first data, and the second electronic white board data.

8. The method according to claim 7, wherein
in a case where the second data comprises the video stream in the first data and the second electronic white board data, displaying the second data comprises:
superimposing and synthesizing the video stream in the first data and the second electronic white board data for display;
or, in a case where the second data comprises the picture captured from the video stream in the first data and the second electronic white board data, displaying the second data comprises:
superimposing and synthesizing the picture captured from the video stream in the first data and the second electronic white board data for display;
or, in a case where the second data comprises the playback video stream selected from the video stream in the first data and the second electronic white board data, displaying the second data comprises:
superimposing and synthesizing the playback video stream selected from the video stream in the first data and the second electronic white board data for display.

9. The method according to claim 7, wherein
the first electronic white board data is information marked and/or written by an assistance requesting party on the video stream collected by the assistance requesting device; and
the second electronic white board data is information marked and/or written by an assisting party on the video stream in the first data, or information marked and/or written by the assisting party on the picture captured from the video stream in the first data, or information marked and/or written by the assisting party on the playback video stream selected from the video stream in the first data.

10. The method according to claim 7, wherein before sending the first data by the assistance requesting device, the method further comprises:
establishing, by the assistance requesting device, a connection channel with the assisting device,
wherein the first data is sent through the connection channel and the second data is received through the connection channel.

11. The method according to claim 7, wherein before sending the first data by the assistance requesting device, the method further comprises:
establishing, by the assistance requesting device, a connection with the assisting device through an assisting server,
wherein the first data is sent through the assisting server and the second data is received through the assisting server.

12. A method for realizing remote assistance, comprising:
receiving, by an assisting server, first data sent by an assistance requesting device and forwarding, by the assisting server, the first data to an assisting device, wherein the first data comprises one of the following: an audio stream and a video stream collected by the assistance requesting device, or the audio stream and the video stream collected by the assistance requesting device and first electronic white board data; and
receiving, by the assisting server, second data sent by the assisting device, and forwarding, by the assisting server, the second data to the assistance requesting device, wherein the second data comprises one of the following: the video stream in the first data and second electronic white board data; a picture captured from the video stream in the first data and the second electronic white board data; a playback video stream selected from the video stream in the first data and the second electronic white board data; an audio stream collected by the assisting device, the video stream in the first data, and the second electronic white board data; the audio stream collected by the assisting device, the picture captured from the video stream in the first data, and the second electronic white board data; or the audio stream collected by the assisting device, the playback video stream selected from the video stream in the first data, and the second electronic white board data.

13. The method according to claim 12, wherein
the first electronic white board data is information marked and/or written by an assistance requesting party on the video stream collected by the assistance requesting device; and
the second electronic white board data is information marked and/or written by an assisting party on the video stream in the first data, or information marked and/or written by the assisting party on the picture captured from the video stream in the first data, or information marked and/or written by the assisting party on the playback video stream selected from the video stream in the first data.

14. The method according to claim 12, wherein before receiving the first data sent by the assistance requesting device, the method further comprises:
receiving an assistance request sent by the assistance requesting device; and
assigning the corresponding assisting device to the assistance requesting device, and establishing an online connection for the assistance requesting device and the assisting device.

15. A method for realizing remote assistance, comprising:
receiving, by a third-party assisting device, a first request sent by an assisting device, wherein the first request is used for requesting a third party to participate in assistance;
sending, by the third-party assisting device, a connection establishment request to an assisting server, and receiving, by the third-party assisting device, first data sent by the assisting server, wherein the first data comprises one of the following: an audio stream and a video stream collected by an assistance requesting device, or the audio stream and the video stream collected by the assistance requesting device and first electronic white board data; and
sending third data by the third-party assisting device, wherein the third data comprises one of the following: the video stream in the first data and third electronic white board data; a picture captured from the video stream in the first data and third electronic white board data; a playback video stream selected from the video stream in the first data and the third electronic white board data; an audio stream collected by the third-party assisting device, the video stream in the first data, and the third electronic white board data; the audio stream collected by the third-party assisting device, the picture captured from the video stream in the first data, and the third electronic white board data; or the audio stream collected by the third-party assisting device, the playback video stream selected from the video stream in the first data, and the third electronic white board data.

16. The method according to claim 15, wherein
the first electronic white board data is information marked and/or written by an assistance requesting party on the video stream collected by the assistance requesting device; and
the third electronic white board data is information marked and/or written by the third party on the video stream in the first data, or information marked and/or written by the third party on the picture captured from the video stream in the first data, or information marked and/or written by the third party on the playback video stream selected from the video stream in the first data.

17. A method for realizing remote assistance, comprising:
receiving, by an assisting server, a connection establishment request sent by at least one third-party assisting device, and sending, by the assisting server, first data to the at least one third-party assisting device;
receiving, by the assisting server, second data sent by an assisting device and third data sent by the at least one third-party assisting device; and
sending, by the assisting server, fourth data obtained by mixing the second data and the third data to an assistance requesting device.

18. The method according to claim 17, wherein
the first data comprises one of the following: an audio stream and a video stream collected by the assistance requesting device, or the audio stream and the video stream collected by the assistance requesting device and first electronic white board data;
the second data comprises one of the following: the video stream in the first data and second electronic white board data; a picture captured from the video stream in the first data and the second electronic white board data; a playback video stream selected from the video stream in the first data and the second electronic white board data; an audio stream collected by the assisting device, the video stream in the first data, and the second electronic white board data; the audio stream collected by the assisting device, the picture captured from the video stream in the first data, and the second electronic white board data; or the audio stream collected by the assisting device, the playback video stream selected from the video stream in the first data, and the second electronic white board data; and
the third data comprises one of the following: the video stream in the first data and third electronic white board data; a picture captured from the video stream in the first data and the third electronic white board data; a playback video stream selected from the video stream in the first data and the third electronic white board data; an audio stream collected by the at least one third-party assisting device, the video stream in the first data, and the third electronic white board data; the audio stream collected by the at least one third-party assisting device, the picture captured from the video stream in the first data, and the third electronic white board data; or the audio stream collected by the at least one third-party assisting device, the playback video stream selected from the video stream in the first data, and the third electronic white board data.

19. The method according to claim 18, wherein
the first electronic white board data is information marked and/or written by an assistance requesting party on the video stream collected by the assistance requesting device;
the second electronic white board data is information marked and/or written by an assisting party on the video stream in the first data, or information marked and/or written by the assisting party on the picture captured from the video stream in the first data, or information marked and/or written by the assisting party on the playback video stream selected from the video stream in the first data; and
the third electronic white board data is information marked and/or written by the at least one third party on the video stream in the first data, or information marked and/or written by the at least one third party on the picture captured from the video stream in the first data, or information marked and/or written by the at least one third party on the playback video stream selected from the video stream in the first data.

20. The method according to claim 17, wherein
the fourth data comprises one of the following: an audio stream obtained by performing audio mixing on the audio stream in the second data and the audio stream in the third data; fourth electronic white board data obtained by internally superimposing and mixing the second electronic white board data and the third electronic white board data; or the video stream in the first data or the picture captured from the video stream in the first data or the playback video stream selected from the video stream in the first data, which is currently being subjected to electronic white board based marking and/or writing.

21. The method according to claim 17, wherein before receiving, by the assisting server, the connection establishment request sent by the at least one third-party assisting device, the method further comprises:
receiving the first data sent by the assistance requesting device, and forwarding the first data to the assisting device.

22. A method for realizing remote assistance, comprising:
receiving and displaying fourth data by an assistance requesting device, wherein the fourth data comprises one of the following: an audio stream obtained by performing audio mixing on an audio stream in second data and an audio stream in third data; fourth electronic white board data obtained by internally superimposing and mixing second electronic white board data and third electronic white board data; or a video stream in first data or a picture captured from the video stream in the first data or a playback video stream selected from the video stream in the first data, which is currently being subjected to electronic white board based marking and/or writing.

23. The method according to claim 22, wherein before receiving the fourth data by the assistance requesting device, the method further comprises:
sending the first data, wherein the first data comprises one of the following: an audio stream and a video stream collected by an assistance requesting device, or the audio stream and the video stream collected by the assistance requesting device and first electronic white board data.

24. The method according to claim 23, wherein
the second data comprises one of the following: the video stream in the first data and second electronic white board data; a picture captured from the video stream in the first data and the second electronic white board data; a playback video stream selected from the video stream in the first data and the second electronic white board data; an audio stream collected by the assisting device, the video stream in the first data, and the second electronic white board data; the audio stream collected by the assisting device, the picture captured from the video stream in the first data, and the second electronic white board data; or the audio stream collected by the assisting device, the playback video stream selected from the video stream in the first data, and the second electronic white board data; and
the third data comprises one of the following: the video stream in the first data and third electronic white board data; a picture captured from the video stream in the first data and the third electronic white board data; a playback video stream selected from the video stream in the first data and the third electronic white board data; an audio stream collected by the at least one third-party assisting device, the video stream in the first data, and the third electronic white board data; the audio stream collected by the at least one third-party assisting device, the picture captured from the video stream in the first data, and the third electronic white board data; or the audio stream collected by the at least one third-party assisting device, the playback video stream selected from the video stream in the first data, and the third electronic white board data.

25. The method according to claim 24, wherein
the first electronic white board data is information marked and/or written by an assistance requesting party on the video stream collected by the assistance requesting device;
the second electronic white board data is information marked and/or written by an assisting party on the video stream in the first data, or information marked and/or written by the assisting party on the picture captured from the video stream in the first data, or information marked and/or written by the assisting party on the playback video stream selected from the video stream in the first data; and
the third electronic white board data is information marked and/or written by the at least one third party on the video stream in the first data, or information marked and/or written by the at least one third party on the picture captured from the video stream in the first data, or information marked and/or written by the at least one third party on the playback video stream selected from the video stream in the first data.

26. The method according to claim 22, wherein displaying the fourth data comprises:
superimposing and synthesizing the fourth electronic white board data in the fourth data and the video stream in the first data, or the fourth electronic white board data in the fourth data and the picture captured from the first data, or the fourth electronic white board data in the fourth data and the playback video stream selected from the video stream in the first data for display.

27. An assisting device, comprising:
a receiving and displaying unit, configured to receive and display first data, wherein the first data comprises one of the following: an audio stream and a video stream collected by an assistance requesting device, or the audio stream and the video stream collected by the assistance requesting device and first electronic white board data; and
a sending unit, configured to send second data, wherein the second data comprises one of the following: the video stream in the first data and second electronic white board data; a picture captured from the video stream in the first data and the second electronic white board data; a playback video stream selected from the video stream in the first data and the second electronic white board data; an audio stream collected by the assisting device, the video stream in the first data, and the second electronic white board data; the audio stream collected by the assisting device, the picture captured from the video stream in the first data, and the second electronic white board data; or the audio stream collected by the assisting device, the playback video stream selected from the video stream in the first data, and the second electronic white board data.

28. An assistance requesting device, comprising:
a sending unit, configured to send first data, wherein the first data comprises one of the following: an audio stream and a video stream collected by an assistance requesting device, or the audio stream and the video stream collected by the assistance requesting device and first electronic white board data; and
a receiving and displaying unit, configured to receive and display second data, wherein the second data comprises one of the following: the video stream in the first data and second electronic white board data; a picture captured from the video stream in the first data and the second electronic white board data; a playback video stream selected from the video stream in the first data and the second electronic white board data; an audio stream collected by the assisting device, the video stream in the first data, and the second electronic white board data; the audio stream collected by the assisting device, the picture captured from the video stream in the first data, and the second electronic white board data; or the audio stream collected by the assisting device, the playback video stream selected from the video stream in the first data, and the second electronic white board data.

29. An assisting server, comprising:
a first receiving and forwarding unit, configured to receive first data sent by an assistance requesting device and forward the first data to an assisting device, wherein the first data comprises one of the following: an audio stream and a video stream collected by the assistance requesting device, or the audio stream and the video stream collected by the assistance requesting device and first electronic white board data; and
a second receiving and forwarding unit, configured to receive second data sent by the assisting device, and forward the second data to the assistance requesting device, wherein the second data comprises one of the following: the video stream in the first data and second electronic white board data; a picture captured from the video stream in the first data and the second electronic white board data; a playback video stream selected from the video stream in the first data and the second electronic white board data; an audio stream collected by the assisting device, the video stream in the first data, and the second electronic white board data; the audio stream collected by the assisting device, the picture captured from the video stream in the first data, and the second electronic white board data; or the audio stream collected by the assisting device, the playback video stream selected from the video stream in the first data, and the second electronic white board data.

30. A third-party assisting device, comprising:
a receiving unit, configured to receive a first request sent by an assisting device, wherein the first request is used for requesting a third party to participate in assistance;
a first sending unit, configured to send a connection establishment request to an assisting server, and receive first data sent by the assisting server, wherein the first data comprises one of the following: an audio stream and a video stream collected by an assistance requesting device, or the audio stream and the video stream collected by the assistance requesting device and first electronic white board data; and
a second sending unit, configured to send third data, wherein the third data comprises one of the following: the video stream in the first data and third electronic white board data; a picture captured from the video stream in the first data and the third electronic white board data; a playback video stream selected from the video stream in the first data and the third electronic white board data; an audio stream collected by the third-party assisting device, the video stream in the first data, and the third electronic white board data; the audio stream collected by the third-party assisting device, the picture captured from the video stream in the first data, and the third electronic white board data; or the audio stream collected by the third-party assisting device, the playback video stream selected from the video stream in the first data, and the third electronic white board data.

31. An assisting server, comprising:
a first receiving and sending unit, configured to receive a connection establishment request sent by at least one third-party assisting device, and send first data to the at least one third-party assisting device;
a second receiving unit, configured to receive second data sent by an assisting device and third data sent by the at least one third-party assisting device; and
a sending unit, configured to send fourth data obtained by mixing the second data and the third data to an assistance requesting device.

32. An assistance requesting device, comprising:
a receiving and displaying unit, configured to receive and display fourth data, wherein the fourth data comprises one of the following: an audio stream obtained by performing audio mixing on an audio stream in second data and an audio stream in third data; fourth electronic white board data obtained by internally superimposing and mixing second electronic white board data and third electronic white board data; or a video stream in first data or a picture captured from the video stream in the first data or a playback video stream selected from the video stream in the first data, which is currently being subjected to electronic white board based marking and/or writing.

33. An assisting device, comprising: a memory, a processor and a computer program which is stored on the memory and capable of running on the processor, wherein when executed by the processor, the computer program implements the method for realizing remote assistance according to any one of claims 1 to 6.

34. An assistance requesting device, comprising: a memory, a processor and a computer program which is stored on the memory and capable of running on the processor, wherein when executed by the processor, the computer program implements the method for realizing remote assistance according to any one of claims 7 to 11 or claims 22 to 26.

35. An assisting server, comprising: a memory, a processor and a computer program which is stored on the memory and capable of running on the processor, wherein when executed by the processor, the computer program implements the method for realizing remote assistance according to any one of claims 12 to 14 or claims 17 to 21.

36. A third-party assisting device, comprising: a memory, a processor and a computer program which is stored on the memory and capable of running on the processor, wherein when executed by the processor, the computer program implements the method for realizing remote assistance according to any one of claims 15 to 16.

37. A system for realizing remote assistance, comprising the assisting device according to claim 33 and the assistance requesting device according to claim 34.

38. The system according to claim 37, further comprising: the assisting server according to claim 35.

39. The system according to claim 38, further comprising: the third-party assisting device according to claim 36.

40. A computer-readable storage medium, storing an information processing program, wherein when executed by a processor, the information processing program implements operations of the method for realizing remote assistance according to any one of claims 1 to 26.
